# EUROPÄISCHE PATENTANMELDUNG

(11) **EP 1 445 092 A1**
(43) Veröffentlichungstag der Anmeldung: **11.08.2004**
(21) Anmeldenummer: 03025216.7
(22) Anmeldetag: 05.11.2003
(51) Int. Cl.: B29C 67/24, B29B 7/76

(54) **Vorrichtung in Polyurethan verarbeitenden Spritzgiessmaschinen zur Druckeinstellung**

(30) Priorität: 05.02.2003 DE 10304593
(71) Anmelder: KLÖCKNER DESMA SCHUHMASCHINEN GmbH, 28832 Achim (DE)
(72) Erfinder: Krämer, Rudolf, 28832 Achim (DE)
(74) Vertreter: Röther, Peter, Dipl.-Phys.

(57) **Zusammenfassung**

Die Erfindung betrifft eine Vorrichtung in Polyurethan verarbeitenden Spritzgießmaschinen zur Druckeinstellung in den Kreisläufen der Polyurethan-Komponenten Polyol und Isocyanat, wobei die Kreisläufe jeweils von einem Komponentenbehälter ausgehen und über jeweils eine Dosierpumpe zu jeweils einem durchströmbaren Komponentenventil führen, das in die Mischkammer der Spritzgießmaschine mündet, wobei die Mischkammer über einen Angußkanal mit der Formkavität eines Spritzgießwerkzeugs in Verbindung steht, und vom jeweiligen Komponentenventil eine Leitung zurück zum jeweiligen Komponentenbehälter führt, die dadurch gekennzeichnet ist, dass in jeden Kreislauf (1,2) eine Proportionaldrossel (13,14) eingebaut ist, welche von einer Zentralsteuerung (SPS) (12) ansteuerbar ist und diese SPS (12) mit im jeweiligen Kreislauf (1,2) angeordneten Druckmessumformern (10,11) verbunden ist.

## Beschreibung

Die Erfindung betrifft eine Vorrichtung in Polyurethan verarbeitenden Spritzgießmaschinen zur Druckeinstellung in den Kreisläufen der Polyurethan-Komponenten Polyol und Isocyanat, wobei die Kreisläufe jeweils von einem Komponentenbehälter ausgehen und über jeweils eine Dosierpumpe zu jeweils einem durchströmbaren Komponentenventil führen, das in die Mischkammer der Spritzgießmaschine mündet, wobei die Mischkammer über einen Angusskanal mit der Formkavität eines Spritzgießwerkzeugs in Verbindung steht, und vom jeweiligen Komponentenventil eine Leitung zum jeweiligen Komponentenbehälter führt.

Mit Hilfe dieser Spritzgießmaschinen werden beispielsweise Schuhe hergestellt, wobei die aus Polyol und Isocyanat gebildete Polyurethanmischung zur Formung von ein- oder mehrfarbigen bzw. ein- oder mehrschichtigen Sohlen dient, die in einem mehr oder weniger voll automatsichen Verfahren an auf Leisten gezogene Schäfte angespritzt werden.

Die zu Polyurethan ausreagierenden Komponenten zirkulieren jeweils in einem eigenen Kreislauf, wobei zur Erzielung eines optimalen Spritzergebnisses Sorge getragen werden muss, dass in den jeweiligen Komponentenkreisläufen aufeinander abgestimmte, und sicher reproduzierbare Druckverhältnisse herrschen.

Dabei unterscheidet man den Rezirkulationsdruck und den Spritzdruck. Bei bisher üblichen Vorrichtungen ist der Rezirkulationsdruck kleiner als der Spritzdruck und kann nur von Hand mechanisch eingestellt werden.

Um für den eigentlichen Spritzvorgang z.B. nach Durchsatzänderung, Temperaturänderung, nach Pausen- und Wochenendschaltungen diese reproduzierbaren Druckverhältnisse automatisch zu erhalten, ist gemäß dem kennzeichnenden Teil des Patentanspruchs 1 vorgesehen, dass in jedem Kreislauf eine Proportionaldrossel eingebaut ist, welche von einer Zentralsteuerung (SPS) ansteuerbar ist und diese SPS mit im jeweiligen Kreislauf angeordneten Druckmessumformern verbunden ist.

Die Druckmessumformer detektieren laufend den in der Zirkulationsleitung vorhandenen Druck und geben ihre Signale an die SPS weiter, in der ein Sollwert-Istwert-Vergleich durchgeführt wird, wonach die jeweilige Proportionaldrossel von der SPS gesteuert betätigt wird, um in der Zirkulationsleitung den gewünschten Druck automatisch auf Spritzdruck einzustellen und zu halten.

Wie oben bereits ausgeführt, wird diese automatische Druckeinstellung immer bei Durchsatzänderung, Temperaturänderung, nach Pausen- und Wochenendschaltungen und nach dem Einspritzen vorgenommen.

Nach jeder Anpassung wird eine Proportionaldrosselüberwachung durchgeführt.

Schaltwechsel finden bei dem Vorgang Rezirkulation auf Einspritzen und Einspritzen auf Rezirkulation statt.

Das heißt: nach dem Umschalten von Rezirkulation auf Einspritzen wird die Proportionaldrossel gesteuert geöffnet. Beim Umschalten von Einspritzen auf Rezirkulation wird die Proportionaldrossel auf Rezirkulationsdruck geschaltet. Hierdurch ist eine permanente Überwachung der Proportionaldrossel gegeben, was bei der Komponente Isocyanat wegen der Kristallbildung wichtig ist.

Durch die automatische Drucküberwachung und Einstellung mit Hilfe der Druckmessumformer, der SPS und der Proportionaldrosseln ergeben sich vielfältige Vorteile.

Durch die Druckreduzierung im Rezirkulationskreis bei längeren Pausen (Pausen- und Wochenendschaltungen) ergibt sich ein materialschonender Betrieb, sowohl für die Komponente Polyol als auch für die Komponente Isocyanat (siehe oben). Darüber hinaus wird der Vorlauf einer Komponente durch die Gleichschaltung von Rezirkulationsdruck und Spritzdruck minimiert. Darüber hinaus werden natürlich auch die Pumpen und Komponentenventile sowie die Proportionaldrosseln selber geschont.

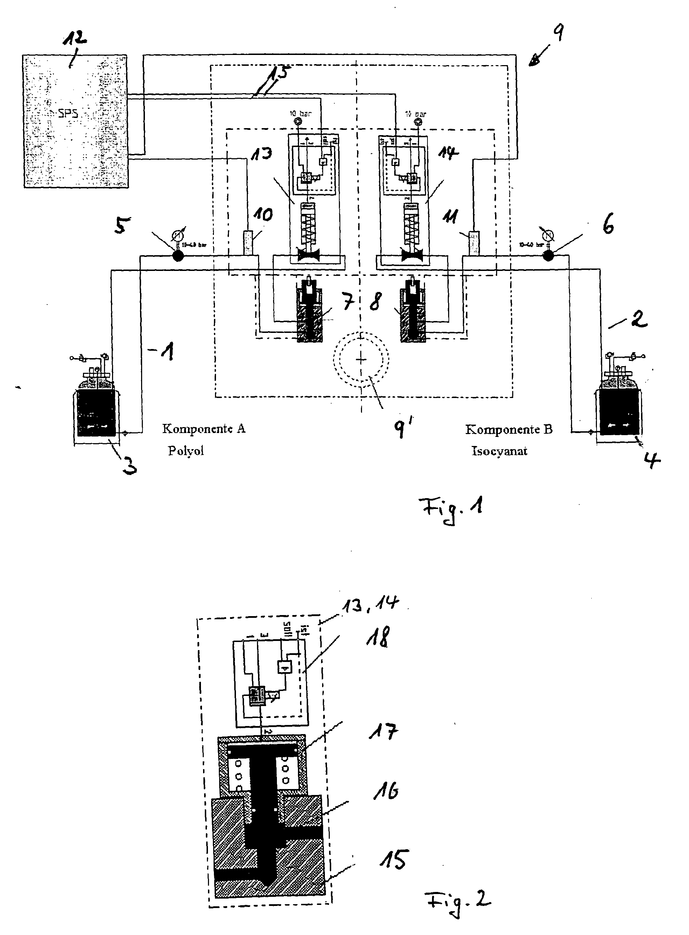

Gemäß Anspruch 2 wird vorgeschlagen, dass die Proportionaldrossel in die Rückleitung vom Komponentenventil zum Komponentenbehälter eingebaut ist und gemäß Anspruch 3, dass der Druckmessumformer in der Leitung vom Komponentenbehälter zum Komponentenventil vorgesehen ist. Diese Ausführungsform ist in der beigefügten Zeichnung Figur 1 dargestellt.

Die Erfindung ist jedoch auf diese Anordnung nicht beschränkt. Z.B. kann gemäß Anspruch 7 auch vorgesehen sein, dass die Komponentenventile durch die Proportionaldrosseln gebildet sind, dass diese also eine Baueinheit bilden, die kleinbauend am Mischkopf angeordnet wird.

Gemäß der Ausführungsform nach Anspruch 4 ist die Proportionaldrossel aus einem von der SPS ansteuerbaren Proportional-Druckventil und einem von diesem Ventil aktivierbaren Antrieb für das Drosselelement aufgebaut.

Gemäß Anspruch 5 kann der Antrieb ein Stellzylinder sein, wie in der beiliegenden Zeichnung Figur 2 dargestellt.

Es ist jedoch auch denkbar (Anspruch 6), dass der Antrieb ein Schrittmotor ist.

Wie bereits oben ausgeführt, können mit Hilfe der erfindungsgemäßen Vorrichtung verschiedenfarbige Sohlen hergestellt werden.

Daher liegt es nahe, dass (gemäß Anspruch 8) mindestens eine weitere Dosierpumpe zur Zudosierung eines Farbstoffes aus einem zugehörigen Farbbehälter vorgesehen ist, wobei die Zuleitung von der Farbdosierpumpe zur Mischkammer und von dort zurück zum Farbbehälter führt, wobei in dieser Zirkulationsleitung ebenfalls eine Proportionaldrossel sowie ein Druckmessumformer vorgesehen ist, die entsprechend den Ansprüchen 1 bis 7 aufgebaut sein können.

Die Erfindung wird im folgenden anhand von Zeichnungen dargestellt und erläutert.

Es zeigen:
- Fig. 1: eine Prinzipskizze der erfindungsgemäßen Vorrichtung
- Fig.2: eine Proportionaldrossel

In der Figur 1 ist eine Vorrichtung in Polyurethan verarbeitenden Spritzgießmaschinen zur Druckeinstellung in den Kreisläufen der Polyurethan-Komponenten Polyol 1 und Isocyanat 2 dargestellt. Die Kreisläufe 1 und 2 gehen jeweils von einem Komponentenbehälter 3 und 4 aus, wobei die jeweilige Komponente über jeweils eine Dosierpumpe 5 und 6 zu jeweils einem Komponentenventil 7 und 8 gefördert wird, welches durchströmbar ist, das heißt, dass der Komponentenanteil, der für den Spritzgießvorgang nicht benötigt wird, wieder zurück in den Komponentenbehälter 3, 4 gefördert werden kann.

Von den Komponentenventilen 7, 8 gelangt das für den Spritzgießvorgang vorgesehene Material in die Mischkammer 9, in der eine Mischschnecke 9' für die Vermischung der Komponenten sowie das Einbringen des Polyurethan-Gemischs in das nicht dargestellte Formwerkzeug einer ebenfalls nicht dargestellten Spritzgießmaschine vorgesehen ist.

Das nicht benötigte Material wird wie oben bereits ausgeführt wieder zurück in den jeweiligen Komponentenbehälter 3, 4 gefördert, so dass hier jeweils ein vollständiger Kreislauf vorliegt.

Im dargestellten Ausführungsbeispiel ist in die Zuführleitung 1 bzw. 2 vom Komponentenbehälter 3, 4 zum Komponentenventil 7, 8 jeweils ein Druckmessumformer 10, 11 vorgesehen, der seine Messsignale einer Maschinenzentralsteuerung (SPS 12) zur Verarbeitung zuführt, wobei die SPS die hieraus erzeugten Steuerungs- und Regelsignale an jeweils eine Proportionaldrossel 13 und 14 über entsprechende Signalleitungen 15 sendet.

Wie im Detail aus Figur 2 hervorgeht, besteht die Proportionaldrossel 13,14 aus der in einem Gehäuse 15 angeordneten Drossel 16, die motorisch angetrieben wird, beispielsweise durch einen Stellzylinder 17 oder einen Schrittmotor. Zur gesteuerten Betätigung des Zylinders 17 dient ein Proportional-Druckventil 18, dessen Anschlüsse mit der SPS 12 verbunden sind.

Die Proportionaldrossel arbeitet in einem Druckbereich zwischen 3 und 25 bar.

Durch die erfindungsgemäße Vorrichtung werden automatisch in beiden Komponentenkreisläufen 1 und 2 aufeinander abgestimmte, sicher reproduzierbare Druckverhältnisse eingestellt, wobei der Rezirkulationsdruck dem Spritzdruck entspricht.

## Patentansprüche

1. Vorrichtung in Polyurethan verarbeitenden Spritzgießmaschinen zur Druckeinstellung in den Kreisläufen der Polyurethan-Komponenten Polyol und Isocyanat, wobei die Kreisläufe jeweils von einem Komponentenbehälter ausgehen und über jeweils eine Dosierpumpe zu jeweils einem durchströmbaren Komponentenventil führen, das in die Mischkammer der Spritzgießmaschine mündet, wobei die Mischkammer über einen Angußkanal mit der Formkavität eines Spritzgießwerkzeugs in Verbindung steht, und vom jeweiligen Komponentenventil eine Leitung zurück zum jeweiligen Komponentenbehälter führt, **dadurch gekennzeichnet, dass** in jeden Kreislauf (1,2) eine Proportionaldrossel (13,14) eingebaut ist, welche von einer Zentralsteuerung (SPS) (12) ansteuerbar ist und diese SPS (12) mit im jeweiligen Kreislauf (1,2) angeordneten Druckmessumformern (10,11) verbunden ist.

2. Vorrichtung nach Anspruch 1, **dadurch gekennzeichnet, dass** die Proportionaldrossel (10,11) in die Rückleitung vom Komponentenventil (7,8) zum Komponentenbehälter (3,4) eingebaut ist.

3. Vorrichtung nach Anspruch 1 oder 2, **dadurch gekennzeichnet, dass** der Druckmessumformer (10,11) in der Leitung vom Komponentenbehälter (3,4) zum Komponentenventil (7,8) vorgesehen ist.

4. Vorrichtung nach einem der Ansprüche 1 bis 3, **dadurch gekennzeichnet, dass** die Proportionaldrossel (10,11) aus einem von der SPS (12) ansteuerbaren Proportional-Druckventil (18) und einem von diesem Ventil (18) aktivierbaren Antrieb (17) für das Drosselelement (16) besteht.

5. Vorrichtung nach Anspruch 4, **dadurch gekennzeichnet, dass** der Antrieb ein Stellzylinder (17) ist.

6. Vorrichtung nach Anspruch 4, **dadurch gekennzeichnet, dass** der Antrieb ein Schrittmotor ist.

7. Vorrichtung nach einem der Ansprüche 1 bis 6, **dadurch gekennzeichnet, dass** die Komponentenventile (7,8) durch die Proportionaldrosseln (13,14) gebildet sind.

8. Vorrichtung nach einem der Ansprüche 1 bis 7, **dadurch gekennzeichnet, dass** mindestens eine weitere Dosierpumpe zur Zudosierung eines Farbstoffes aus einem zugehörigen Farbbehälter vorgesehen ist, wobei die Zuleitung von der Farbdosierpumpe zur Mischkammer und von dort zurück zum Farbbehälter führt, wobei in dieser Zirkulationsleitung ebenfalls eine Proportionaldrossel (13,14) sowie ein Druckmessumformer (10,11) vorgesehen ist.
